(19) Europäisches Patentamt
European Patent Office
Office européen des brevets

(11) **EP 3 476 627 B1**

(12) **EUROPÄISCHE PATENTSCHRIFT**

(45) Veröffentlichungstag und Bekanntmachung des Hinweises auf die Patenterteilung:
**01.03.2023** Patentblatt **2023/09**

(21) Anmeldenummer: **18192202.2**

(22) Anmeldetag: **03.09.2018**

(51) Internationale Patentklassifikation (IPC):
**B60C 23/04** *(2006.01)*     **B60G 17/015** *(2006.01)*
**B60T 8/17** *(2006.01)*

(52) Gemeinsame Patentklassifikation (CPC):
**B60G 17/0155; B60C 23/009; B60C 23/0408;
B60T 8/1708;** B60G 2202/152; B60G 2300/042;
B60G 2400/51222; B60G 2400/52; B60T 2260/06

(54) **ZUGFAHRZEUG UND SATTELANHÄNGER**

TOWING VEHICLE AND SEMI-TRAILER

VÉHICULE TRACTEUR ET SEMI-REMORQUE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **23.10.2017 DE 102017009843**

(43) Veröffentlichungstag der Anmeldung:
**01.05.2019** Patentblatt **2019/18**

(73) Patentinhaber: **ZF CV Systems Europe BV
1170 Brussels (BE)**

(72) Erfinder: **MENTZENDORFF, Olaf
30989 Gehrden (DE)**

(74) Vertreter: **Koschnitzki, Thomas
ZF CV Systems Hannover GmbH
Am Lindener Hafen 21
30453 Hannover (DE)**

(56) Entgegenhaltungen:
**DE-A1-102012 108 684     DE-A1-102015 008 390
US-A1- 2010 156 667     US-A1- 2013 158 740**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Zugfahrzeug für einen Sattelanhänger, mit Luftfederbälgen und einem Drucksensor an wenigstens einem Luftfederbalg oder einem mit dem Luftfederbalg verbundenen Volumen. Daneben betrifft die Erfindung einen Anhänger für ein Zugfahrzeug, Verfahren nach den Ansprüchen 7, 14 und 16 sowie ein Steuergerät.

Sattelanhänger und hierfür vorgesehene Zugfahrzeuge weisen eine pneumatische Bremsanlage in Verbindung mit einem elektronischen Bremssystem auf. In Europa verbreitet bzw. vorgesehen ist eine Datenschnittstelle zum Austausch von Informationen zwischen Steuergeräten in Zugfahrzeug und Anhänger. Das elektronische Steuergerät des Bremssystems im Anhänger kann auf diese Weise alle Informationen aus dem Zugfahrzeug zur Verfügung gestellt bekommen, die für mit dem elektronischen Bremssystem verknüpfte Funktionen erforderlich sind. Hauptaufgabe der Datenschnittstelle ist die Übermittlung der Bremsanforderung an den Sattelanhänger. Die pneumatische Bremsanlage ist mit einer pneumatischen Federung verknüpft. Luftfederbälge der Federung erhalten Druckluft aus dem Vorrat der Bremsanlage.

Inzwischen ebenfalls weit verbreitet und in Europa ab 2020 geplante Vorschrift ist ein Reifendrucküberwachungssystem (TPMS). Ein Reifendrucksensor zur Bestimmung des Reifendrucks ist mit einem Funkmodul versehen und auf jeder Felge montiert. Das Funkmodul ist mit einer Langzeitbatterie ausgestattet, mit einer Lebensdauer von bis zu zehn Jahren. Ziel ist insbesondere die frühzeitige Erkennung drohender Reifenschäden und die Minimierung damit zusammenhängender Unfälle. Außerdem ermöglicht ein optimaler Reifendruck eine lange Reifenlebensdauer bei geringem Kraftstoffverbrauch.

Ein typischer Sattelanhänger mit drei Achsen und sechs Rädern weist sechs Reifendrucksensoren auf. Die Signale der zugehörigen Funkmodule werden von einem gemeinsamen Empfänger am Sattelanhänger empfangen und im Steuergerät des elektronischen Bremssystems verarbeitet.

Eine wichtige Einflussgröße für das Fahrverhalten und Bremsverhalten ist die Gesamtmasse des Sattelanhängers bzw. die von Fall zu Fall unterschiedliche Zuladung des Sattelanhängers. Die Gesamtmasse/Zuladung ist ermittelbar durch Bestimmung der im Bereich von Auflagepunkten wirksamen Kräfte. Im Bereich der Hinterachse des Sattelanhängers werden diese Kräfte repräsentiert durch den Druck in den Luftfederbälgen (Balgdruck) und durch den mittels der Reifendrucksensoren messbaren Reifendruck. Die Achslasten des Sattelanhängers werden üblicherweise über die Datenschnittstelle zum Zugfahrzeug übertragen. Der Balgdruck bzw. die Achslast des Zugfahrzeugs wird jedoch bislang in der Praxis nicht an den Sattelanhänger übermittelt, sodass das Steuergerät im Sattelanhänger nicht die eigene Masse errechnen kann. Das elektronische Bremssystem des Sattelanhängers agiert deshalb nicht in Abhängigkeit von der Masse des Sattelanhängers, sondern kann teilweise sicherheitsrelevante Fahrzeugregelungen nur auf Basis ungefährer Werte durchführen.

Aus der DE 10 2015 008 390 A1 ist es bekannt, aus Balgdrücken Achslasten von Zugfahrzeug und Sattelanhänger zu berechnen und daraus die Masse des Sattelanhängers zu bestimmen. Die Berechnung findet im Bremsen-Steuergerät des Sattelanhängers statt. Hierzu werden Daten eines Balgdrucksensors des Zugfahrzeugs von dessen Steuergerät per WLAN zum Bremsen-Steuergerät des Sattelanhängers übertragen.

Die US 2013/0158740 A1 offenbart ein Gespann aus PKW und Caravan mit einer WLAN-Verbindung zwischen Steuergeräten der beiden Fahrzeuge. Reifendrücke des Caravans werden drahtlos zum PKW übertragen. Ausgewählte andere Daten werden drahtlos vom PKW zum Caravan übertragen.

In der DE 10 2012 108 684 A1 ist ein Verfahren zur Steuerung eines Luftfedersystems in einem Fahrzeug offenbart. An Luftfedern sind Sensoren angeordnet, welche Luftfederinnendruck, Temperatur und Identifizierung mittels eines zugeordneten Funksenders an ein Steuergerät des Fahrzeugs übermitteln.

In der DE 20 2014 009 865 U1 ist die Ermittlung des Ladegewichts eines Kraftfahrzeugs mit Anhänger aus den Luftdruckdaten eines Reifendruckkontrollsystems offenbart.

Aufgabe der vorliegenden Erfindung ist die Schaffung einer möglichst einfach umzusetzenden Fahrzeuggestaltung für die Messung von Gesamtmasse, Zuladung oder anderer Teilmasse des Sattelanhängers. Insbesondere sollen die für die Bestimmung der Masse benötigten Daten einfach und unkompliziert erfasst werden. Schließlich sollen die Daten auf einfache Weise vom Zugfahrzeug zu einem Anhänger übertragbar sein.

Ein erfindungsgemäßes Zugfahrzeug weist die Merkmale des Anspruchs 1 auf. Das Zugfahrzeug weist einen Drucksensor an wenigstens einem Luftfederbalg oder einem mit dem Luftfederbalg verbundenen Volumen auf, wobei der Drucksensor den Druck im Luftfederbalg erfasst und wobei der Drucksensor ein Reifendrucksensor mit Funkmodul für die drahtlose Übertragung von Druckwerten ist. Je größer die Gesamtmasse des Sattelanhängers, umso höher ist der Druck in den Luftfederbälgen des Zugfahrzeugs. Gleiches gilt für den Druck in einem mit einem der Luftfederbälge verbundenen Volumen, etwa in zu den Luftfederbälgen führenden Leitungen. In diesem Bereich ist wenigstens ein Drucksensor mit Funkmodul vorgesehen, mit dem die ermittelten Druckwerte drahtlos an einen Empfänger im Sattelanhänger übermittelt werden können. Drucksensor und Funkmodul können in einem Bauteil integriert vorgesehen und dadurch verbunden sein oder als eigenständige Geräte ausgebildet und über eine Leitung verbunden sein. Die genannten Luftfederbälge des Zugfahrzeugs sind vorzugsweise der Hinterachse desselben zugeordnet.

Nach einem Gedanken der Erfindung ist der Drucksensor ein Reifendrucksensor. Die Technologie ist grundsätzlich bekannt und erprobt. Mit dem zugehörigen Funkmodul können die ermittelten Druckwerte zum Empfänger im Sattelanhänger übertragen werden. Eine zusätzliche Ausstattung im Sattelanhänger ist nicht erforderlich. Angepasst werden muss lediglich die Datenverarbeitung im Steuergerät des Sattelanhängers zur Erkennung und Verarbeitung der Daten des zusätzlichen Reifendrucksensors.

Nach einem weiteren Gedanken der Erfindung übersendet das Funkmodul eine Kennung zur Identifizierung. Anhand der Kennung erkennt das Steuergerät im Sattelanhänger, dass es sich bei den übermittelten Daten um Druckwerte des Luftfederbalges am Zugfahrzeug handelt, also gerade nicht um Reifendrücke.

Nach einem weiteren Gedanken der Erfindung übersendet das Funkmodul zusätzlich zu den Druckwerten Parameter des Zugfahrzeugs. Für die Berechnung von Gesamtmasse/Zuladung des Sattelanhängers werden Daten über die Geometrie des Zugfahrzeugs benötigt, nämlich bestimmte horizontale Abstände zwischen Sattel, Vorderachse, Hinterachse, Luftfederbalg und Hinterachslagerung. Diese können einmal ermittelt und im Funkmodul abgespeichert werden, sodass eine Übersendung an den Sattelanhänger möglich ist.

Gegenstand der Erfindung ist auch ein Zugfahrzeug mit den Merkmalen des unabhängigen Anspruchs 5. Zugrunde liegt der oben bereits angesprochene Gedanke der drahtlosen Übertragung von Informationen vom Zugfahrzeug zum Anhänger mittels eines Reifendrucksensors mit Funkmodul. Ausgegangen wird von einem Zugfahrzeug mit Druckluftsystem und Reifendrucksensor mit Funkmodul für die drahtlose Übermittlung von Druckwerten. Zusätzlich sind insbesondere folgende Merkmale vorgesehen:

a) der Reifendrucksensor ist einem Teil-Volumen des Druckluftsystems zugeordnet,
b) das Teil-Volumen ist durch ein Magnetventil mit Druckluft beaufschlagbar.

Das Funkmodul sendet die vom Reifendrucksensor ermittelten Druckwerte, vorzugsweise zusammen mit einer Kennung zur Identifizierung des Reifendrucksensors / Funkmoduls. Auch können zusammen mit den genannten Daten weitere Daten und/oder Parameter des Zugfahrzeugs gesendet werden. Besonders vorteilhaft ist ein derartiges Zugfahrzeug, wenn eine drahtgebundene Schnittstelle zum Anhänger nicht besteht oder nur begrenzt Informationen zum Anhänger überträgt. Durch gezielte Ansteuerung des Magnetventils können einfache Informationen über den Reifendrucksensor mit Funkmodul zum Anhänger übertragen werden.

Im Reifendrucksensor ist insbesondere ein Funkmodul integriert.

Nach einem weiteren Gedanken der Erfindung ist das Magnetventil in Abhängigkeit vom Einlegen eines Rückwärtsgangs oder von der Bestromung einer Rückfahrleuchte betätigbar. Auf diese Weise kann über die Kette Magnetventil - Reifendrucksensor - Funkmodul die Information über das Einlegen des Rückwärtsgangs oder die Bestromung der Rückfahrleuchte zum Anhänger übertragen werden. So kann bei einem amerikanischen Sattelzug, bei dem die Anhängerschnittstelle keine Kabelverbindung für Rückfahrscheinwerfer vorsieht, dennoch die Information über das Einlegen des Rückwärtsgangs übertragen werden, um beispielsweise ein Rückfahrassistenzsystem zu aktivieren oder eine Lenkachse zu sperren. Für diesen Fall kann mittels des Magnetventils an einem Rückwärtsgangschalter des Getriebes des Zugfahrzeugs der Reifendrucksensor mit Druckluft beaufschlagt werden und so ein eindeutiges Signal im Steuergerät des Anhängers erzeugen. Des Weiteren ist es denkbar, über Druckmodulation an dem Reifendrucksensor verschiedene Signalstufen zu erzeugen, um damit mehrere Informationen oder analoge Werte zu übertragen.

Ein erfindungsgemäßer Anhänger ist insbesondere ein Sattelanhänger und weist die Merkmale des Anspruchs 6 auf. Der Anhänger ist vorgesehen für ein Zugfahrzeug, wie zuvor beschrieben, und weist ein Reifendrucküberwachungssystem, einen Empfänger zum Detektieren der Signale des Funkmoduls des Zugfahrzeugs und ein Steuergerät zur Verarbeitung der Signale des Funkmoduls auf. Das Steuergerät erkennt die Signale des Funkmoduls des Zugfahrzeugs entweder an einer Kennung oder an den speziellen Druckwerten. Die gewöhnlich auftretenden Druckwerte der Luftfederbälge im Zugfahrzeug können sich erkennbar von den üblichen Druckwerten der Reifendrucksensoren im Anhänger unterscheiden und so eine Unterscheidung der Signale ermöglichen, sofern Übersendung und/oder Verarbeitung einer Kennung nicht vorgesehen sind.

Ein erfindungsgemäßes Verfahren zum Bestimmen einer Masse eines Sattelanhängers weist die Merkmale des Anspruchs 7 auf. Der Sattelanhänger ist mit Sensoren zur Bestimmung der Reifendrücke oder zur Bestimmung von Achslasten versehen und weist ein Steuergerät zur Auswertung der von den Sensoren bereitgestellten Daten auf. Das Verfahren ist durch folgende Schritte gekennzeichnet:

a) der Sattelanhänger wird mit einem passenden Zugfahrzeug verbunden und das Zugfahrzeug weist an wenigstens einem Luftfederbalg oder an einem mit dem Luftfederbalg verbundenen Volumen einen Reifendrucksensor mit Funkmodul auf,
b) vom Reifendrucksensor ermittelte Druckwerte werden vom Funkmodul per Funk zum Sattelanhänger übertragen,
c) im Steuergerät des Sattelanhängers wird die Masse aufgrund der von den Sensoren des Sattelanhängers und dem Reifendrucksensor des Zugfahrzeugs ermittelten Daten bestimmt.

Der Begriff "Masse" kann sich auf die Gesamtmasse, auf die Zuladung oder auf eine andere Teilmasse des Sattelanhängers beziehen. Der Sattelanhänger ist vorzugsweise mit einem Reifendrucküberwachungssystem ausgestattet, dessen Steuergerät auch die Masse bestimmt. Das Steuergerät ist vorzugsweise zugleich Bremsen-Steuergerät eines elektronischen Bremssystems. Aufgrund der insgesamt zur Verfügung stehenden Daten ist auch eine Berechnung der Verteilung der Masse des Sattelanhängers möglich.

Nach einem weiteren Gedanken der Erfindung werden für die Bestimmung der Masse benötigte Informationen über die Geometrie des Zugfahrzeugs ebenfalls zum Steuergerät im Sattelanhänger übertragen oder sind dort abgespeichert. Nach einem weiteren Gedanken der Erfindung werden die Informationen über die Geometrie des Zugfahrzeugs zusätzlich zu den vom Reifendrucksensor ermittelten Druckwerten gesendet. Vorzugsweise werden diese Informationen zusammen mit den Druckwerten gesendet. Alternativ werden diese Informationen seltener oder sogar nur jeweils nach dem Einschalten der Zündung des Zugfahrzeugs gesendet.

Nach einem weiteren Gedanken der Erfindung ist vorgesehen, dass der Drucksensor im Zugfahrzeug ein Reifendrucksensor ist und die Sensoren im Sattelanhänger Reifendrucksensoren sind.

Nach einem weiteren Gedanken der Erfindung wird zusammen mit den vom Reifendrucksensor des Zugfahrzeugs ermittelten Druckwerten auch eine Kennung gesendet, welche auf den Drucksensor hinweist. Die Kennung beinhaltet die Information, dass die zugehörigen Druckwerte dem Luftfederbalg des Zugfahrzeugs zuzuordnen sind. Dabei kann es sich auch nur mittelbar um eine Kennung des Reifendrucksensors handeln, etwa als Kennung des mit dem Reifendrucksensor verbundenen Funkmoduls.

Nach einem weiteren Gedanken der Erfindung werden die vom Reifendrucksensor ermittelten und als solche vom Sattelanhänger empfangenen Daten nur dann zur Bestimmung der Masse verarbeitet, wenn die Daten innerhalb eines bestimmten Zeitraums wiederholt empfangen werden. Das heißt, das Steuergerät im Sattelanhänger prüft, ob vom selben Reifendrucksensor mehrfach ähnliche Druckwerte eingegangen sind. Nur wenn dies zutrifft, werden die Daten weiterverarbeitet. Dieser Verfahrensschritt kann als Plausibilitäts- und Fehlerkontrolle dienen. So ist vorstellbar, dass der Sattelanhänger noch nicht an ein Zugfahrzeug angekoppelt ist, dass aber ein anderes Zugfahrzeug in geringer Entfernung vorbeifährt und entsprechende Daten übersendet. Diese Daten sind nur kurzzeitig für das Steuergerät im Sattelanhänger sichtbar, werden somit nicht mehrfach empfangen und werden entsprechend verworfen.

Nach einem weiteren Gedanken der Erfindung wird eine am Sattelanhänger vorhandene Liftachse angehoben, insbesondere zu Testzwecken nur kurzzeitig. Die daraus resultierende Änderung der vom Reifendrucksensor ermittelten Druckwerte wird für die Bestimmung der Masse berücksichtigt. Die "Bestimmung der Masse" ist hier im weitesten Sinne zu verstehen. Es kann sich dabei auch um eine Plausibilitätskontrolle handeln. Sofern beim Anheben der Liftachse keine Änderung der vom Reifendrucksensor ermittelten Druckwerte eintritt, werden die Daten verworfen, da daraus erkennbar ist, dass die Druckwerte nicht vom mit dem Sattelanhänger verbundenen Zugfahrzeug stammen können. Das Anheben der Liftachse kann auch während der Fahrt bei geringer Geschwindigkeit durchgeführt werden.

Nach einem weiteren Gedanken der Erfindung wird eine aus einem Bremsvorgang resultierende Änderung der vom Reifendrucksensor ermittelten Druckwerte für die Bestimmung der Masse berücksichtigt. Die "Bestimmung der Masse" ist wiederum im weitesten Sinne zu verstehen. Es kann sich auch um eine Plausibilitätskontrolle handeln. Bei einem beladenen Sattelanhänger wird bei höherer Bremsverzögerung eine Achslastverlagerung erwartet. Wenn sich diese Verlagerung nicht in den Daten des Reifendrucksensors wiederspiegelt, dann werden die Druckwerte verworfen, da sie nicht vom zugehörigen Zugfahrzeug stammen können.

Ein erfindungsgemäßes Verfahren zum Übermitteln von Daten von einem Zugfahrzeug zum Anhänger weist gemäß dem unabhängigen Anspruch 14 insbesondere folgende Merkmale auf:

- das Zugfahrzeug ist mit einem Druckluftsystem und wenigstens einem Reifendrucksensor mit Funkmodul versehen,
- ein Druckwert wird in einem Teil-Volumen des Druckluftsystems eingestellt,
- der eingestellte Druckwert wird vom Reifendrucksensor detektiert,
- der detektierte Druckwert wird vom Funkmodul drahtlos gesendet,
- der gesendete Druckwert wird von einem Empfänger im Anhänger empfangen.

Nach einem weiteren Gedanken der Erfindung wird der Druckwert durch ein Magnetventil eingestellt, welches in Abhängigkeit vom Einlegen eines Rückwärtsgangs oder der Bestromung einer Rückfahrleuchte schaltet.

Ein erfindungsgemäßes Verfahren zum Steuern von Aktionen in einem mit einem Zugfahrzeug verbundenen Anhänger weist die Merkmale des Anspruchs 16 auf. Erfindungsgemäß werden ein Zugfahrzeug und ein Anhänger verwendet, wie voranstehend beschrieben. Änderungen der Druckwerte oder das Erreichen bestimmter Druckwerte lösen Aktionen im Anhänger aus. Bei Anordnung des Reifendrucksensors an einem mit einem Luftfederbalg verbundenen Volumen können Druckwerte aus dem Luftfederbalg zum Anhänger übertragen werden und dort in Berechnungen eines Steuergerätes eingehen. Nach einem anderen Beispiel bewirkt das Einlegen des Rückwärtsgangs im Zugfahrzeug ein Aufleuchten der Rückfahrleuchten des Zugfahrzeugs. Der Strom für die Rückfahrleuchten steuert zugleich ein insbesondere speziell vorgesehenes Magnetventil auf, welches ein mit dem Drucksensor verbundenes Volumen speist, sodass der Druck steigt. Die Druckwerte werden vom Reifendrucksensor laufend per Funk zum Anhänger übersandt. Der Empfänger im Anhänger empfängt die Druckwerte und das Steuergerät im Anhänger erkennt die Änderung der Druckwerte und schaltet zum Beispiel Rückfahrsensoren ein. Somit ist durch gezielte Druckänderung oder Druckvorgabe am Reifendrucksensor des Zugfahrzeugs eine Aktion im Anhänger auslösbar. Durch ausreichende Differenzierung und Auflösung der Druckwerte können unterschiedliche Aktionen ausgelöst werden. Alternativ kann das Magnetventil durch ein Steuergerät des Zugfahrzeugs angesteuert werden.

Gegenstand der Erfindung ist auch ein Steuergerät zur Durchführung eines der voranstehend und in den Ansprüchen angegebenen Verfahren. Das Steuergerät wertet die eingehenden Daten aus, berechnet die Masse und/oder löst entsprechende Aktionen aus.

Weitere Merkmale der Erfindung ergeben sich aus der Beschreibung im Übrigen und aus den Ansprüchen. Vorteilhafte Ausführungsbeispiele werden nachfolgend anhand von Zeichnungen näher erläutert. Es zeigen:

Fig. 1    einen Sattelanhänger mit dafür vorgesehenem Zugfahrzeug,
Fig. 2    das Zugfahrzeug analog Fig. 1, mit Darstellung einiger geometrischer Daten,
Fig. 3    eine vereinfachte Schaltung mit Rückfahrleuchte, Magnetventil und TPMS-Modul.

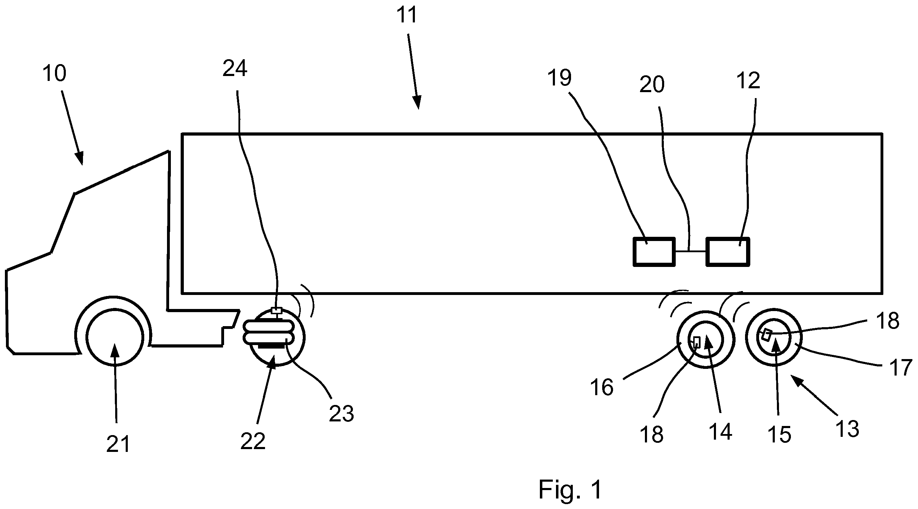

In Fig. 1 dargestellt ist ein Sattelzug, bestehend aus Zugfahrzeug 10 und Sattelanhänger 11. Beide weisen eine pneumatische Bremsanlage mit elektronischem Bremssystem auf. Im Sattelanhänger 11 eingezeichnet ist ein elektronisches Steuergerät 12 mit integrierten pneumatischen Funktionen, welches auch als Modulator bezeichnet wird.

Eine Hinterachsgruppe 13 des Sattelanhängers 11 ist zweiachsig ausgeführt, nämlich mit vorderer Achse 14 und hinterer Achse 15, von denen eine eine Liftachse sein kann. Jedem Hinterrad 16, 17 ist ein TPMS-Modul 18 (TPMS = Tire Pressure Monitoring System) zugeordnet, nämlich ein Reifendrucksensor mit Funkmodul als Komponenten eines Reifendrucküberwachungssystems.

Ein TPMS-Empfänger 19 im Sattelanhänger 11 empfängt die von den TPMS-Modulen 18 gesendeten Daten und leitet diese über eine Datenleitung 20 zum Steuergerät 12. Bei ausreichendem Druckverlust an den Hinterrädern 16, 17 leitet das Steuergerät 12 selbstständig eine Bremsung ein. Auch können entsprechende Daten über eine nicht gezeigte Verbindung an das Zugfahrzeug 10 übergeben werden.

Das Zugfahrzeug 10 ist mit einer pneumatischen Federung an Vorderachse 21 und Hinterachse 22 ausgestattet. Der Hinterachse 22 ist ein Luftfederbalg 23 zugeordnet, welcher einen Balgdrucksensor aufweist. Der Balgdrucksensor ist ein TPMS-Modul 24 oder zumindest ein Drucksensor nach Art eines Reifendrucksensors mit Funkmodul, analog zu den TPMS-Modulen 18. Die Signale des TPMS-Moduls 24 werden ebenfalls vom TPMS-Empfänger 19 empfangen und zum Steuergerät 12 weitergeleitet.

Die Signale des TPMS-Moduls 24 enthalten Druckwerte und eine Kennung, sodass eine Unterscheidung zu den Druckwerten der TPMS-Module 18 möglich ist und das Steuergerät 12 die Zuordnung zum Zugfahrzeug 10 bzw. zu dessen Hinterachse 22 erkennt.

Im Steuergerät 12 sind Daten zur Fahrwerksgeometrie von Sattelanhänger 11 und Zugfahrzeug 10 hinterlegt. Alternativ übersendet das TPMS-Modul 24 einmalig oder mehrfach Daten zur Fahrwerksgeometrie des Zugfahrzeugs 10.

Auf der Grundlage der insgesamt vorliegenden Daten kann das Steuergerät 12 die Masse bzw. Zuladung des Sattelanhängers 11 berechnen und das Ergebnis bei der Durchführung von Aufgaben berücksichtigen, etwa im Zusammenhang mit einer dynamischen Achslastverlagerung oder Bremskraftverteilung. Auch kann die berechnete Masse an das Zugfahrzeug 10 übermittelt werden und vom dortigen Steuergerät bei der Ausführung von Aktionen berücksichtigt werden.

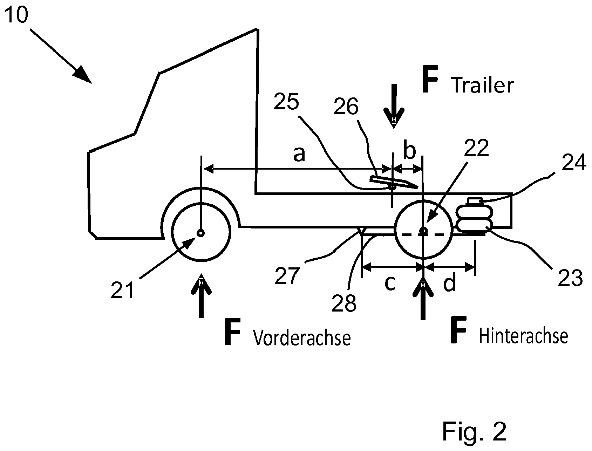

Die Berechnung der Masse des Sattelanhängers 11 unter Berücksichtigung verschiedener Achslasten ist beispielsweise in der DE 10 2015 008 390 A1 dargestellt. Eine ähnliche Art der Berechnung ergibt sich anhand der beiliegenden Figuren 1 und 2. Ausgegangen wird von einem Sattelanhänger 11 ohne Zuladung und mit erfassten, also bekannten Druckwerten der TPMS-Module 18, 24. Nach dem Beladen des Sattelanhängers 11 übersenden die TPMS-Module 18, 24 höhere Druckwerte an das Steuergerät 12. Aus den Differenzen lässt sich die Masse der Zuladung berechnen. Als Beispiel wird auf die Bestimmung der Auflagekraft $F_{Trailer}$ gemäß Fig. 2 verwiesen:
Ein im Luftfederbalg 23 vorliegender Druck $P_{Bellow}$ ergibt sich aus der Auflagekraft $F_{Trailer}$ mittels folgender Gleichung:

$$P_{Bellow} = \frac{\frac{1}{2} F_{Trailer} \cdot a/(a+b) \cdot c/(c+d)}{Pi \cdot D_{Bellow}^{2} / 4}$$

Dabei sind

a horizontaler Abstand Vorderachse 21 zu einem Sattelpunkt (für Königszapfen) 25 eines Sattels 26
b horizontaler Abstand Sattelpunkt 25 zur Hinterachse 22
c horizontaler Abstand Anlenkpunkt 27 für Hinterachslenker 28 zur Hinterachse 22
d horizontaler Abstand Hinterachse 22 zum Luftfederbalg 23

$D_{Bellow}$ wirksamer Durchmesser des Luftfederbalgs 23 (auf jeder Fahrzeugseite einer)
$F_{Trailer}$ Auflagekraft des Sattelanhängers 11 auf dem Zugfahrzeug 10 und zugleich die Summe der an Vorderachse 21 und Hinterachse 22 wirksamen Gegenkräfte $F_{Vorderachse}$ und $F_{Hinterachse}$ in Fig. 2.
Pi Kreiszahl $\pi$

Bei Annahme der nachfolgenden Beispieldaten

$P_{Bellow}$ = 2,8 bar (2800 hPa) im TPMS-Modul 24
a = 3,5 m
b = 0,5 m
c = 0,8 m
d = 0,5 m
$D_{Bellow}$ = 0,35 m

ergibt sich durch Auflösung nach $F_{Trailer}$ eine Auflagekraft von 100.000 N. In Verbindung mit den von den TPMS-Modulen 18 ermittelten Druckwerten lässt sich die Masse des Sattelanhängers 11 im Steuergerät 12 bestimmen und kann weiteren Berechnungen im Steuergerät 12 zu Grunde gelegt werden.

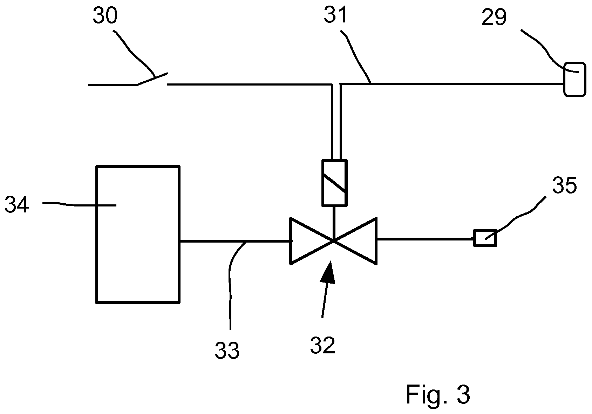

In Fig. 3 vereinfacht dargestellt ist eine Ansteuerung eines TPMS-Moduls 35 durch Einschalten einer Rückfahrleuchte 29. Beim Einlegen eines Rückwärtsgangs im Getriebe eines Zugfahrzeugs wird ein Kontakt 30 geschlossen, z.B. automatisch durch einen Rückwärtsgangschalter am Getriebe, und die Rückfahrleuchte 29 erhält über eine Leitung 31 Strom. Der Strom läuft über ein Magnetventil 32, welches zumindest kurzzeitig oder bis zum Erreichen eines bestimmten Drucks öffnet und Luft über eine Druckluftleitung 33 aus einem Vorrat 34 in das TPMS-Modul 35 einsteuert. Das Magnetventil 32 kann einfach ausgeführt sein und ist vorzugsweise ein 3/2-Wege-Ventil, welches unbestromt das TPMS-Modul 35 entlüftet.

Der Druckwert wird vom TPMS-Modul 35 erfasst und gesendet. Das Steuergerät im zugeordneten Anhänger enthält einen entsprechenden Empfänger, erkennt den Druck und führt eine bestimmte Aktion aus. Beispielsweise werden bei einem bestimmten Druck Sensoren zur Rückraumüberwachung des Anhängers eingeschaltet.

Als Empfänger ist im nicht gezeigten Anhänger vorzugsweise ein Steuergerät mit TPMS-Empfangsmodul vorgesehen. Dieses wertet daneben die übermittelten Daten von TPMS-Modulen an den Rädern des Anhängers aus.

Die Ansteuerung des TPMS-Moduls 35 ist unabhängig vom Vorhandensein eines Luftfederbalgs und ermöglicht das Versenden nahezu beliebiger Informationen als Ersatz für eine fehlende physische Leitung (zur Informationsübermittlung) zwischen Zugfahrzeug und Anhänger.

Bezugszeichenliste (Teil der Beschreibung)

| 10 | Zugfahrzeug |
|---|---|
| 11 | Sattelanhänger |
| 12 | Steuergerät |
| 13 | Hinterachsgruppe |
| 14 | vordere Achse |
| 15 | hintere Achse |
| 16 | Hinterrad |
| 17 | Hinterrad |
| 18 | TPMS-Modul |
| 19 | TPMS-Empfänger |
| 20 | Datenleitung |
| 21 | Vorderachse |
| 22 | Hinterachse |
| 23 | Luftfederbalg |

24 TPMS-Modul
25 Sattelpunkt
26 Sattel
27 Anlenkpunkt
28 Hinterachslenker
29 Rückfahrleuchte
30 Kontakt
31 elektrische Leitung
32 Magnetventil
33 Druckluftleitung
34 Vorrat
35 TPMS-Modul

**Patentansprüche**

1. Zugfahrzeug (10) für einen Sattelanhänger (11), mit Luftfederbälgen und mit einem Drucksensor an wenigstens einem Luftfederbalg (23) oder an einem mit dem Luftfederbalg verbundenen Volumen, wobei der Drucksensor den Druck im Luftfederbalg erfasst, **dadurch gekennzeichnet, dass** der Drucksensor ein Reifendrucksensor (24, 35) mit Funkmodul für die drahtlose Übermittlung von Druckwerten ist.

2. Zugfahrzeug nach Anspruch 1, **dadurch gekennzeichnet, dass** das Funkmodul eine Kennung zur Identifizierung übersendet.

3. Zugfahrzeug nach einem der Ansprüche 1 bis 2, **dadurch gekennzeichnet, dass** das Funkmodul Parameter des Zugfahrzeugs (10) übersendet.

4. Zugfahrzeug (10), mit Druckluftsystem und Reifendrucksensor (24, 35) mit Funkmodul für die drahtlose Übermittlung von Druckwerten, **gekennzeichnet durch** folgende Merkmale:

   a) der Reifendrucksensor (24, 35) ist einem Teil-Volumen des Druckluftsystems zugeordnet,
   b) das Teil-Volumen ist durch ein Magnetventil (32) mit Druckluft beaufschlagbar.

5. Zugfahrzeug nach Anspruch 4, **dadurch gekennzeichnet, dass** das Magnetventil (32) in Abhängigkeit vom Einlegen eines Rückwärtsgangs oder von der Bestromung einer Rückfahrleuchte (29) betätigbar ist.

6. Anhänger (11) für ein Zugfahrzeug (10) nach einem der Ansprüche 1 bis 5, vorzugsweise Sattelanhänger (11) und mit einem Reifendrucküberwachungssystem, mit einem Empfänger (19) zum Detektieren der Signale des Funkmoduls des Zugfahrzeugs (10), und mit einem Steuergerät (12) zur Verarbeitung der Signale des Funkmoduls, wobei das Steuergerät die Signale des Funkmoduls des Zugfahrzeugs entweder an einer Kennung oder an speziellen Druckwerten erkennt.

7. Verfahren zum Bestimmen einer Masse eines Sattelanhängers (11), wobei der Sattelanhänger (11) mit Sensoren zur Bestimmung der Reifendrücke oder zur Bestimmung von Achslasten versehen ist und ein Steuergerät (12) zur Auswertung der von den Sensoren bereitgestellten Daten aufweist, **gekennzeichnet durch** folgende Schritte:

   a) der Sattelanhänger (11) wird mit einem passenden Zugfahrzeug (10) verbunden und das Zugfahrzeug (10) weist an wenigstens einem Luftfederbalg (23) oder an einem mit dem Luftfederbalg (23) verbundenen Volumen einen Reifendrucksensor (24, 35) mit Funkmodul auf,
   b) vom Reifendrucksensor (24, 35) ermittelte Druckwerte werden vom Funkmodul per Funk zum Sattelanhänger (11) übertragen,
   c) im Steuergerät (12) des Sattelanhängers (11) wird die Masse aufgrund der von den Sensoren des Sattelanhängers (11) und dem Reifendrucksensor (24, 35) des Zugfahrzeugs (10) ermittelten Daten bestimmt.

8. Verfahren nach Anspruch 7, **dadurch gekennzeichnet, dass** für die Bestimmung der Masse benötigte Informationen über die Geometrie des Zugfahrzeugs (10) ebenfalls zum Steuergerät (12) im Sattelanhänger (11) übertragen werden oder dort abgespeichert sind.

9. Verfahren nach Anspruch 8, **dadurch gekennzeichnet, dass** die Informationen über die Geometrie des Zugfahrzeugs (10) zusätzlich zu den vom Reifendrucksensor (24, 35) ermittelten Druckwerten gesendet werden.

10. Verfahren nach einem der Ansprüche 7 bis 9, **dadurch gekennzeichnet, dass** zusammen mit den vom Reifendrucksensor (24, 35) ermittelten Druckwerten auch eine Kennung gesendet wird, welche auf den Reifendrucksensor (24, 35) hinweist.

11. Verfahren nach einem der Ansprüche 7 bis 10, **dadurch gekennzeichnet, dass** die vom Reifendrucksensor (24, 35) ermittelten und als solche vom Sattelanhänger (11) empfangenen Daten nur dann zur Bestimmung der Masse verarbeitet werden, wenn die Daten innerhalb eines bestimmten Zeitraums wiederholt empfangen werden.

12. Verfahren nach einem der Ansprüche 7 bis 11, **dadurch gekennzeichnet, dass** eine am Sattelanhänger (11) vorhandene Liftachse angehoben wird, und dass die daraus resultierende Änderung der vom Reifendrucksensor (24, 35) ermittelten Druckwerte für die Bestimmung der Masse berücksichtigt wird, insbesondere als Plausibilitätskontrolle.

13. Verfahren nach einem der Ansprüche 7 bis 12, **dadurch gekennzeichnet, dass** eine aus einem Bremsvorgang resultierende Änderung der vom Reifendrucksensor (24, 35) ermittelten Druckwerte für die Bestimmung der Masse berücksichtigt wird, insbesondere als Plausibilitätskontrolle.

14. Verfahren zum Übermitteln von Daten von einem Zugfahrzeug (10) zu einem Anhänger, wobei das Zugfahrzeug Druckluftsystem und Reifendrucksensor (24, 35) mit Funkmodul aufweist, **dadurch gekennzeichnet,**

   **dass** ein Druckwert in einem Teil-Volumen des Druckluftsystems eingestellt wird, dass der eingestellte Druckwert detektiert wird,
   **dass** der detektierte Druckwert vom Funkmodul drahtlos gesendet wird,
   und **dass** der gesendete Druckwert von einem Empfänger (19) im Anhänger (11) empfangen wird.

15. Verfahren nach Anspruch 14, **dadurch gekennzeichnet, dass** der Druckwert durch ein Magnetventil (32) eingestellt wird, welches in Abhängigkeit vom Einlegen eines Rückwärtsgangs oder der Bestromung einer Rückfahrleuchte (29) schaltet.

16. Verfahren zum Steuern von Aktionen in einem mit einem Zugfahrzeug (10) verbundenen Anhänger (11), **gekennzeichnet durch** die Verwendung eines Zugfahrzeugs (10) nach einem der Ansprüche 1 bis 5 und eines Anhängers (11) nach Anspruch 6, wobei Änderungen der Druckwerte oder das Erreichen bestimmter Druckwerte im Zugfahrzeug (10) Aktionen im Anhänger (11) auslösen.

17. Steuergerät (12), welches zur Durchführung des Verfahrens nach einem der Ansprüche 7 bis 16 eingerichtet ist.

**Claims**

1. A towing vehicle (10) for a semi-trailer (11), comprising air spring bellows and comprising a pressure sensor on at least one air spring bellows (23) or on a volume connected to the air spring bellows, the pressure sensor detecting the pressure in the air spring bellows, **characterized in that** the pressure sensor is a tire pressure sensor (24, 35) that has a radio module for the wireless transmission of pressure values.

2. The towing vehicle according to claim 1, **characterized in that** the radio module transmits an identifier for identification.

3. The towing vehicle according to either claim 1 or claim 2,
   **characterized in that** the radio module transmits parameters of the towing vehicle (10).

4. A towing vehicle (10) comprising a compressed air system and a tire pressure sensor (24, 35) that has radio module for the wireless transmission of pressure values, **characterized by** the following features:

   a) the tire pressure sensor (24, 35) is associated with a partial volume of the compressed air system,
   b) the partial volume can be supplied with compressed air by a solenoid valve (32).

5. The towing vehicle according to claim 4, **characterized in that** the solenoid valve (32) can be actuated on the basis of the engagement of a reverse gear or on the basis of the energization of a reverse light (29).

6. A trailer (11) for a towing vehicle (10) according to any of claims 1 to 5, preferably a semi-trailer (11) and comprising a tire-pressure monitoring system, comprising a receiver (19) for detecting the signals from the radio module of the towing vehicle (10), and comprising a control device (12) for processing the signals from the radio module, wherein the control device recognizes the signals from the radio module of the towing vehicle either in an identifier or at specific pressure values.

7. A method for determining a mass of a semi-trailer (11), the semi-trailer (11) being provided with sensors for determining the tire pressures or for determining axle loads and having a control device (12) for evaluating the data provided by the sensors, **characterized by** the following steps:

   a) the semi-trailer (11) is connected to a suitable towing vehicle (10) and the towing vehicle (10) has, on at least one air spring bellows (23) or on a volume connected to the air spring bellows (23), a tire pressure sensor (24, 35) that has a radio module,
   b) the pressure values determined by the tire pressure sensor (24, 35) are transmitted to the semi-trailer (11) via radio by the radio module,
   c) in the control device (12) of the semi-trailer (11), the mass is determined based on the data determined by the sensors of the semi-trailer (11) and by the tire pressure sensor (24, 35) of the towing vehicle (10).

8. The method according to claim 7, **characterized in that** information regarding the geometry of the towing vehicle (10), which information is required for the determination of the mass, is also transmitted to the control device (12) in the semi-trailer (11) or stored there.

9. The method according to claim 8, **characterized in that** the information regarding the geometry of the towing vehicle (10) is transmitted in addition to the pressure values determined by the tire pressure sensor (24, 35).

10. The method according to any of claims 7 to 9, **characterized in that,** together with the pressure values determined by the tire pressure sensor (24, 35), an identifier indicating the tire pressure sensor (24, 35) is also transmitted.

11. The method according to any of claims 7 to 10, **characterized in that** the data determined by the tire pressure sensor (24, 35) and received as such by the semitrailer (11) are only processed for determining the mass if the data are repeatedly received within a specified period of time.

12. The method according to any of claims 7 to 11, **characterized in that** a lift axle that is present on the semi-trailer (11) is raised, and **in that** the resulting change in the pressure values determined by the tire pressure sensor (24, 35) is taken into consideration for determining the mass, in particular as a plausibility check.

13. The method according to any of claims 7 to 12, **characterized in that** a change in the pressure values determined by the tire pressure sensor (24, 35), which change results from a braking process, is taken into consideration for determining the mass, in particular as a plausibility check.

14. A method for transmitting data from a towing vehicle (10) to a trailer, the towing vehicle comprising a compressed air system and a tire pressure sensor (24, 35) that has a radio module, **characterized in that** a pressure value is set in a partial volume of the compressed air system, **in that** the set pressure value is detected, **in that** the detected pressure value is transmitted wirelessly by the radio module, and **in that** the transmitted pressure value is received by a receiver (19) in the trailer (11).

15. The method according to claim 14, **characterized in that** the pressure value is set by a solenoid valve (32) which switches on the basis of the engagement of a reverse gear or the energization of a reverse light (29).

16. A method for controlling actions in a trailer (11) connected to a towing vehicle (10), **characterized by** the use of a towing vehicle (10) according to any of claims 1 to 5 and of a trailer (11) according to claim 6, changes in the pressure values or the reaching of particular pressure values in the towing vehicle (10) triggering actions in the trailer (11).

17. A control device (12) which is configured to carry out the method according to any of claims 7 to 16.

**Revendications**

**1.** Véhicule tracteur (10) pour une semi-remorque (11), comprenant des coussins d'air et comprenant un capteur de pression sur au moins un coussin d'air (23) ou sur un volume connecté au coussin d'air, le capteur de pression détectant la pression dans le coussin d'air, **caractérisé en ce que** le capteur de pression est un capteur de pression de pneu (24, 35) comprenant un module radio pour la transmission sans fil de valeurs de pression.

**2.** Véhicule tracteur selon la revendication 1, **caractérisé en ce que** le module radio transmet un identifiant pour l'identification.

**3.** Véhicule tracteur selon l'une quelconque des revendications 1 à 2, **caractérisé en ce que** le module radio transmet des paramètres du véhicule tracteur (10).

**4.** Véhicule tracteur (10), comprenant un système d'air comprimé et un capteur de pression de pneu (24, 35) comprenant un module radio pour la transmission sans fil de valeurs de pression, **caractérisé par** les caractéristiques suivantes :

a) le capteur de pression de pneu (24, 35) est associé à un volume partiel du système d'air comprimé,
b) le volume partiel peut être alimenté en air comprimé à travers une électrovanne (32).

**5.** Véhicule tracteur selon la revendication 4, **caractérisé en ce que** l'électrovanne (32) peut être actionnée en fonction de l'engagement d'un rapport de marche arrière ou de l'alimentation d'un feu de recul (29).

**6.** Remorque (11) pour un véhicule tracteur (10) selon l'une quelconque des revendications 1 à 5, de préférence une semi-remorque (11) et comprenant un système de surveillance de la pression des pneus, comprenant un récepteur (19) pour la détection des signaux du module radio du véhicule tracteur (10) et comprenant un appareil de commande (12) pour le traitement des signaux du module radio, l'appareil de commande reconnaissant les signaux du module radio du véhicule tracteur grâce soit à un identifiant soit à des valeurs de pression spécifiques.

**7.** Procédé pour la détermination d'une masse d'une semi-remorque (11), dans lequel la semi-remorque (11) est dotée de capteurs pour la détermination des pressions de pneus ou pour la détermination de charges sur essieux et présente un appareil de commande (12) pour l'évaluation des données fournies par les capteurs, **caractérisé par** les étapes suivantes :

a) la semi-remorque (11) est connectée à un véhicule tracteur (10) adapté et le véhicule tracteur (10) présente au moins un capteur de pression de pneu (24, 35) au niveau d'au moins un coussin d'air (23) ou d'un volume connecté au coussin d'air (23) comprenant un module radio,
b) les valeurs de pression détectées par le capteur de pression de pneu (24, 35) sont transmises par le module radio par radio à la semi-remorque (11),
c) la masse est déterminée dans l'appareil de commande (12) de la semi-remorque (11) sur la base des données détectées par les capteurs de la semi-remorque (11) et le capteur de pression de pneu (24, 35) du véhicule tracteur (10).

**8.** Procédé selon la revendication 7, **caractérisé en ce que** les informations sur la géométrie du véhicule tracteur (10) nécessaires pour la détermination de la masse sont aussi transmises à l'appareil de commande (12) dans la semi-remorque (11) ou y sont enregistrées.

**9.** Procédé selon la revendication 8, **caractérisé en ce que** les informations sur la géométrie du véhicule tracteur (10) sont envoyées en plus des valeurs de pression déterminées par le capteur de pression de pneu (24, 35).

**10.** Procédé selon l'une quelconque des revendications 7 à 9, **caractérisé en ce qu'un** identifiant, qui indique le capteur de pression de pneu (24, 35), est envoyé conjointement aux valeurs de pression déterminées par le capteur de pression de pneu (24, 35).

**11.** Procédé selon l'une quelconque des revendications 7 à 10, **caractérisé en ce que** les données déterminées par le capteur de pression de pneu (24, 35) et reçues comme telles par la semi-remorque (11) ne sont traitées pour la détermination de la masse que lorsque les données sont reçues plusieurs fois dans une période de temps déterminée.

**12.** Procédé selon l'une quelconque des revendications 7 à 11, **caractérisé en ce qu'un** essieu relevable présent sur la semi-remorque (11) est levé et **en ce que** la modification en résultant des valeurs de pression déterminées par le capteur de pression de pneu (24, 35) est prise en compte pour la détermination de la masse, en particulier comme contrôle de plausibilité.

**13.** Procédé selon l'une quelconque des revendications 7 à 12, **caractérisé en ce qu'**une modification résultant d'un freinage des valeurs de pression déterminées par le capteur de pression de pneu (24, 35) est prise en compte pour la détermination de la masse, en particulier comme contrôle de plausibilité.

**14.** Procédé pour la transmission de données d'un véhicule tracteur (10) à une remorque, le véhicule tracteur présentant un système d'air comprimé et un capteur de pression de pneu (24, 35) avec un module radio, **caractérisé en ce qu'**une valeur de pression est réglée dans un volume partiel du système d'air comprimé, **en ce que** la valeur de pression réglée est détectée, **en ce que** la valeur de pression détectée est envoyée sans fil par le module radio et **en ce que** la valeur de pression envoyée est reçue par un récepteur (19) dans la remorque (11).

**15.** Procédé selon la revendication 14, **caractérisé en ce que** la valeur de pression est réglée par une électrovanne (32), laquelle commute en fonction de l'engagement d'un rapport de marche arrière ou de l'alimentation d'un feu de recul (29).

**16.** Procédé pour la commande d'actions dans une remorque (11) connectée à un véhicule tracteur (10), **caractérisé par** l'utilisation d'un véhicule tracteur (10) selon l'une quelconque des revendications 1 à 5 et d'une remorque (11) selon la revendication 6, dans lequel des modifications des valeurs de pression ou l'atteinte de valeurs de pression déterminées dans le véhicule tracteur (10) déclenchent des actions dans la remorque (11).

**17.** Appareil de commande (12), lequel est conçu pour l'exécution du procédé selon l'une quelconque des revendications 7 à 16.

Fig. 1

24

23

**F** Trailer

22

Hinterachse **F**

26

25

a

b

d

c

28

27

Vorderachse **F**

21

10

Fig. 2

EP 3 476 627 B1

30  31  29

34

35

33  32

Fig. 3

**IN DER BESCHREIBUNG AUFGEFÜHRTE DOKUMENTE**

**In der Beschreibung aufgeführte Patentdokumente**

- DE 102015008390 A1
- US 20130158740 A1
- DE 102012108684 A1
- DE 202014009865 U1